# EUROPÄISCHE PATENTANMELDUNG

(11) **EP 1 321 214 A1**
(43) Veröffentlichungstag der Anmeldung: **25.06.2003**
(21) Anmeldenummer: 01130728.7
(22) Anmeldetag: 21.12.2001
(51) Int. Cl.: B23K 1/00, F01D 5/14

(54) **Werkstück mit einer nach aussen durch eine Lötfolie verschlossenen Ausnehmung und Verfahren zum Verschliessen einer Ausnehmung mit einer Lötfolie**

(71) Anmelder: SIEMENS AKTIENGESELLSCHAFT, 80333 München (DE)
(72) Erfinder: Jeutter, Andre, Dr., 45472 Muelheim A.D. Ruhr (DE); Settegast, Silke, 10439 Berlin (DE)

(57) **Zusammenfassung**

Nach dem Stand der Technik werden Löcher in einem Werkstück massiv mit einem Lotpulver ausgefüllt, was insbesondere bei grossen Löchern aufgrund des grossen ausgefüllten Volumens zu einer Rissbildung innerhalb des Lots führt, wenn das Lot nach der Verlötung abkühlt.

Mit dem erfindungsgemäßen Verfahren zum Verschließen einer Ausnehmung (4, 5) eines Werkstücks (1) ist es möglich, eine Öffnung (3) einer Ausnehmung (4, 5) zu verschliessen, ohne dass solche Risse auftreten, indem zum Verschliessen der Ausnehmung (4, 5) nur eine Lötfolie (7) verwendet wird. Die Lötfolie (7) enthält einen Anteil nicht aufschmelzenden Materials und neigt daher erheblich weniger zur Rissbildung.

## Beschreibung

Die Erfindung betrifft ein Werkstück nach dem Oberbegriff des Anspruchs 1 und ein Verfahren zum Verschliessen einer Ausnehmung.

Lötfolien werden beispielsweise verwendet zur stoffschlüssigen Verbindung von Bauteilen, wie es aus der US-PS 5,557,837 bekannt ist. Dabei wird die Lötfolie, die aus einem Lötwerkstoff besteht, dessen Schmelzpunkt deutlich unterhalb des Schmelzpunkts der miteinander zu verbindenden Bauteilen liegt, aufgeschmolzen und verbindet ein nicht aufschmelzendes Einlegeteil, das in eine Ausnehmung eines anderen Bauteils eingesteckt ist.

Ebenso ist es bekannt, Risse oder Öffnungen mit Lotpulver zu füllen, wobei das Lotpulver über dem Riss oder über der Öffnung angehäuft und durch die Wärmezufuhr aufgeschmolzen wird, so dass es in den Riss oder die Öffnung hineinläuft, wie es beispielsweise aus der US-PS 4,098,450 bekannt ist. Insbesondere bei grossen auszufüllenden Ausnehmungen kommt es bei der Abkühlung des Lots wegen der Schrumpfung beim Erstarren vielfach zu Rissen. Das Lot kann in unerwünschter Weise bei Hohlkörpern (z.B. eine hohle Turbinenschaufel), die mit einem zu verschließenden Loch versehen sind, in das Innere des Hohlkörpers eindringen

Ebenso ist es bekannt, Lötfolien zur Beschichtung von Materialien zu benutzen, wie es aus der US-PS 5,968,299 bekannt ist.

Insbesondere bei Gussteilen wie z.B. Turbinenschaufeln (gegossen, gerichtet erstarrt, einkristallin) sind vielfach fertigungsbedingt Sacklöcher oder Durchgangslöcher vorhanden, die verschlossen werden sollen, weil bspw. sonst in unerwünschter Weise Kühlluft aus dem Inneren der Turbinenschaufel durch diese Löcher heraustritt, was den Wirkungsgrad der Turbine verringert.

Aufgabe der Erfindung ist es, ein gattungsgemäßes Werkstück dahingehend weiterzubilden, das seine Ausnehmungen rissfreie Abschlüsse aufweisen, und ein Verfahren zum Verschliessen von Ausnehmungen in einem Werkstück anzugeben, das auf einfache Art und Weise durchführbar ist.

Diese Aufgabe wird hinsichtlich des Werkstücks gelöst durch die kennzeichnenden Merkmale des Patentanspruchs 1.
Vorteilhafte Weiterbildungen ergeben sich aus den abhängigen Ansprüchen. Ein Verfahren zum Verschließen von Ausnehmungen weist erfindungsgemäß die Merkmale des Patentanspruchs 13 auf und ist durch die Merkmale des Anspruchs 14 in vorteilhafter Weise weiter ausgestaltbar.
Die Erfindung sieht vor, dass das Werkstück eine Lötfolie aufweist, die die jeweilige Öffnung der Ausnehmung abdeckt und zumindest im Randbereich der Ausnehmung an einer Oberfläche des Werkstücks mit dem Grundkörper verlötet ist bzw. wird. Dabei ist es wesentlich, dass die Lötfläche zur Vermeidung von Rissen bei der Erstarrung nach dem Löten nur teilweise aus einem Lotwerkstoff besteht.

Die Ausnehmung kann ein Sackloch oder ein Durchgangsloch sein, so dass verschiedene Arten von Ausnehmungen durch die Lötfolie vorteilhafterweise verschlossen sind bzw. werden.

Das Werkstück kann vorteilhafterweise eine Turbinenschaufel für den Einsatz im Hochtemperaturbereich einer Turbine oder Gasturbine in einer korrosiven und errosiven Umgebung sein.

Die Zusammensetzung der Lötfolie aus Grundwerkstoff und Lot wird dem Werkstück und den jeweils vorgesehenen Betriebsbedingungen bzw. der Größe der Ausnehmung angepasst, so dass das Ausnehmung auch während des gesamten Einsatzes des Werkstücks verschlossen bleibt.

Die Lötfolie kann vorteilhafterweise bis zu vier Millimeter dick sein, so dass eine ausreichende mechanische Stabilität gewährleistet ist und auch große Löcher durch die Lötfolie dicht verschlossen sind bzw. werden.

Wenn die Wärmezufuhr zum Verschließen der Ausnehmung, d.h. zum Aufschmelzen des Lotwerkstoffs im Zuge einer Wärmebehandlung des Werkstücks erfolgt, insbesondere im Zuge einer Ausscheidungshärtung oder eines Lösungsglühens des Werkstücks, dann erübrigt sich ein gesonderter Verfahrensschritt zur Verbindung von Lötfolie und Werkstück.

Mehrere Ausführungsbeispiele des erfindungsgemäßen Werkstücks bzw. des erfindungsgemäßen Verfahrens sind in den Figuren dargestellt und werden mit weiteren Einzelheiten der Erfindung nachfolgend näher erläutert.

Es zeigen
Figur 1 a, b, c zwei Ausführungsbeispiele eines erfindungsgemässen Werkstücks,
Figur 2 ein weiteres Ausführungsbeispiel eines erfindungsgemässen Werkstücks,
Figur 3a bis c verschiedene Verfahrensschritte zum Verschliessen einer Ausnehmung eines Werkstücks mit einer Lötfolie und
Figur 4a, b ein vollständiges Ausfüllen einer Ausnehmung.

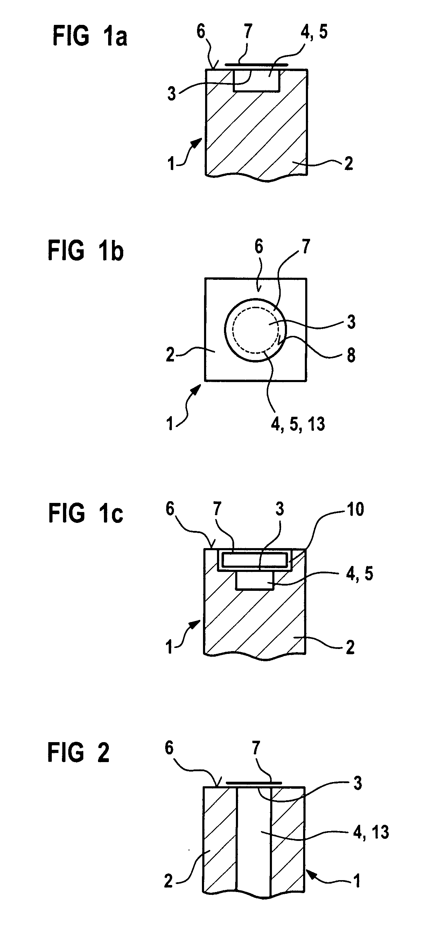

Figur 1a zeigt ein Werkstück 1, bestehend aus einem Grundkörper 2, der zumindest eine Ausnehmung 4, bspw. ein Sackloch 5 aufweist.

Über diesem Sackloch 5 auf einer Oberfläche 6 des Werkstücks 1 ist eine Lötfolie 7 aufgelegt. Die Lötfolie 7 wird durch eine anschliessende Behandlung bei höheren Temperaturen auf die Oberfläche 6 aufgelötet, so dass ein stoffschlüssiger Abschluss zwischen Lötfolie 7 und Werkstück 1 bzw. Grundkörper 2 vorliegt.

Figur 1b zeigt eine Aufsicht auf die Ausnehmung 4, 5 der Figur 1a mit der aufgelegten Lötfolie 7.
Der Öffnungsquerschnitt bzw. eine Öffnung 3 des Sacklochs 5 ist gestrichelt angedeutet. Die Aussenkontur der Lötfolie 7 ist dem Öffnungsquerschnitt des Sacklochs 4 angepasst und überragt den Öffnungsquerschnitt des Sacklochs 5 zumindest teilweise, so dass es zumindest teilweise auf der Oberfläche 6 in einem Auflagebereich 8 aufliegt. In diesem Auflagebereich 8 ist eine gute Verbindung zwischen Lötfolie 7 und Werkstück 1 nach einer Verlötung vorhanden.

Figur 1c zeigt ausgehend von Figur 1a ein weiteres Ausführungsbeispiel, bei dem das Sackloch 5 schon bei der Herstellung oder nachträglich eingebracht eine bspw. stufenförmige Querschnittserweiterung 10, im oberflächennahen Bereich aufweist. In diese Querschnittserweiterung 10 wird die Lötfolie 7 passend eingelegt, so dass die Lötfolie 7 auf dem Grund der hierdurch geschaffenen bspw. ringförmig umlaufenden Vertiefung zumindest teilweise aufliegt und nach dem Verlöten wiederum eine glatte Oberfläche 6 entsteht. Die Lötfolie 7, die dünn ausgeführt ist, und daher weniger wesentlich Material als ein die Ausnehmung 4, 5 ausfüllender Stopfen aufweist, neigt selten zur Rissbildung beim Abkühlen, d.h. beim Schrumpfen.

Figur 2 zeigt ein weiteres Ausführungsbeispiel eines erfindungsgemässen Werkstücks. Im Unterschied zu Figur 1a weist das Werkstück 1 kein Sachloch, sondern ein Durchgangsloch 13 auf, dessen Öffnung 3 durch die Lötfolie 7 verschlossen ist bzw. wird.

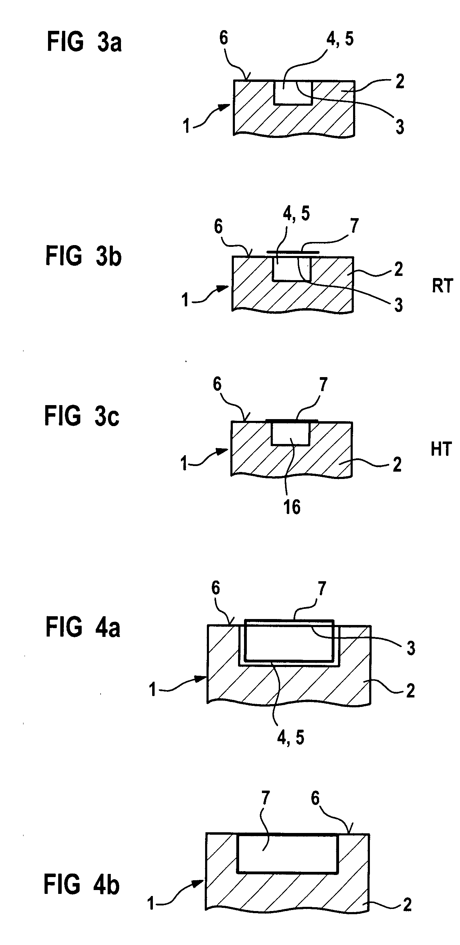

In den Figuren 3a bis c sind Verfahrensschritte zur Herstellung eines Werkstücks 1 mit verschlossener Ausnehmung 4, 5, 13 dargestellt.

Figur 3a zeigt ein Werkstück 1 bspw. mit einem Sackloch 5. Auf das Sackloch 5 wird eine entsprechend ausgestanzte oder ausgeschnittene Lötfolie 7 bei Raumtemperatur RT auf das Sackloch 5 aufgelegt, wie es in Figur 3b dargestellt ist. Das Werkstück 1 mit der aufgelegten Lötfolie 7 wird, um das Grundwerkstoff des Grundkörpers 2 bzw. des Werkstücks 1 z.B. einer Ausscheidungshärtung zu unterziehen, einer Wärmebehandlung bei höheren Temperaturen (HT) ausgesetzt, bei dem die Lötfolie sich mit dem Werkstück 1 verbindet, so dass sich ein nach außen verschlossener Hohlraum 16 unter der Lötfolie 7 bildet.

Es muss nicht notwendigerweise das ganze Werkstück 1 mit der Lötfolie 7 einer Wärmebehandlung bei höheren Temperaturen unterzogen werden. Es reicht beispielsweise aus, den Auflagebereich 8 der Lötfolie 7, der auf der Oberfläche 6 aufliegt (Fig.1 b), beispielsweise durch eine Laserbehandlung oder sonstige energieeinbringende Verfahren so zu erwärmen, dass ein Löten in diesem Bereich zwischen Lötfolie 7 und Oberfläche 6 stattfindet.

Die Zusammensetzung der Lötfolie 7 besteht bspw. aus dem Grundwerkstoff des Werkstücks 1 und einem Lotwerkstoff, die den jeweiligen Betriebsbedingungen, wie z.B. im Hochtemperaturbereich, korrosive und/oder erosive Umgebung, des Werkstücks 1 angepasst werden kann. Die Zusammensetzung und Abmessungen der aus bspw. gepresstem, feinteiligen Material bestehenden Lötfolie werden so gewählt, dass sie auch den mechanischen Belastungen im Einsatz standhalten. Dabei weist die Lötfolie einen hohen Anteil des unter Lötbedingungen nicht aufschmelzenden Grundwerkstoffs oder eines anderen entsprechend hochschmelzenden Materials und einen geringen Anteil aus aufschmelzendem Lotwerkstoff auf. Der Volumenanteil des nicht aufschmelzenden Werkstoffs überragt den Volumenanteil des aufschmelzenden Lotwerkstoffs und liegt zweckmäßigerweise bei über 60% insbesondere bei 70%. Auch noch grössere Anteile sind möglich, z.B. 80% oder 90%. Diese Zusammensetzung und die Temperatur (Löttemperatur), bei der gelötet wird, wird so gewählt, dass das Lot gerade aufschmilzt und eine gute Verbindung von Lötfolie 7 und Werkstück 1 gewährleistet ist. Durch das Aufschmelzen des Lotwerkstoffs werden die einzelnen Körner des verpressten nicht aufschmelzenden Pulvers der Lötfolie 7 miteinander verbunden. Die Lötfolie 7 ist durch das zugesetzte nichtschmelzende Material bei der Löttemperatur noch so zäh, d.h. sie weist eine so hohe Viskosität auf, dass sie nicht oder kaum in die Ausnehmung 4, 5, 13 einsackt. Die Lötfolie 7 muss aber nicht notwendigerweise einen Anteil aus dem Grundwerkstoff des Werkstücks 1 enthalten. Durch den hohen Anteil an nicht aufschmelzendem Werkstoff und Rest aufschmelzendes Lot der Lötfolie 7 wird insbesondere verhindert, dass sich Risse bilden.

Figur 4a, b zeigt ein Werkstück 1, bei dem ein Sackloch 5 durch eine Lötfölie 7 vollständig ausgefüllt ist.
Dabei wird eine Lötfolie 7 bspw. in das Sackloch 5 ungefähr passend eingelegt, d.h. sie entspricht mit ihren Abmessungen im Querschnitt dem Sackloch 5. Die Höhe der Lötfolie 7 ist so bemessen, dass es nach dem zumindest partiellen Aufschmelzen im Randbereich der Lötfolie 7 möglichst zu keinem Überstand an der Oberfläche 6 kommt (Fig. 4b).

Die Lötfolie 7 muss aber nicht notwendigerweise in die Ausnehmung 4, 5 eingelegt werden. Die Masse der Lötfolie 7 muss nur so bemessen sein, dass die aufgeschmolzene Lötfolie 7 in die Ausnehmung 4, 5 eindringt und diese ausfüllt.
In diesem Fall wird die Zusammensetzung der Lötfolie 7 aus Grundwerkstoff und Lotwerkstoff und ihrer sich daraus ergebenden Viskosität bei der Löttemperatur so gewählt, dass der Lotwerkstoff und der Grundwerkstoff in die Ausnehmung 4 eindringen kann und vollständig ausfüllt.
Der Vorteil der Lötfolie 7 liegt darin, dass die Lötfolie 7 gegenüber einer Paste oder einer Pulverschüttung eine sehr hohe Dichte aufweist und die eingebrachte Masse durch die gewählte Größe der Lötfolie 7 sehr genau bemessbar ist, so dass der Schrumpf minimal ist und eine Rissbildung reproduzierbar verhindert und zumindest reduziert ist.

Das Werkstück 1 ist bspw. eine Turbinenschaufel, bestehend bspw. aus einer Nickel-Basis-Superlegierung.

Das Werkstück 1 muss bspw. nach seiner Herstellung oder beim Refurbishment (Wiederherstellen eines benutzten Werkstücks) besonderen Wärmebehandlungen unterzogen werden, um bestimmte Materialeigenschaften zu erzielen.
Wird das gesamte Werkstück 1 bei einer solchen Wärmebehandlung mit der Lötfolie 7 erwärmt, um die Ausnehmung 4 äußerlich zu verschliessen oder vollständig mit einem Lotmaterial auszufüllen, so kann die Zusammensetzung der Lötfolie 7 so ausgewählt werden, dass bei dieser Wärmebehandlung, die beispielsweise ein Lösungsglühen oder eine Ausscheidungshärtung des Werkstücks 1 bezweckt, auch ein Aufschmelzen des Lotwerkstoffs erfolgt, so dass ein separater thermischer Verfahrensschritt zur Verlötung bei der Herstellung des Werkstücks 1 entfällt.

### Bezugzeichenliste

- 1: Werkstück
- 2: Grundkörper
- 3: Öffnung
- 4: Ausnehmung
- 5: Sackloch
- 6: Oberfläche vom Grundkörper 2
- 7: Lötfolie
- 8: Auflagebereich
- 10: Querschnittserweiterung
- 13: Durchgangsloch
- 16: Hohlraum

## Patentansprüche

1. Werkstück (1), das im wesentlichen aus einem Grundkörper (2) gebildet ist,
der eine Oberfläche (6) aufweist, in der zumindest eine Ausnehmung (4) des Grundkörpers (2) vorhanden ist,
wobei nach aussen ein stoffschlüssig mit dem Grundkörper (2) verbundener Abschluss der Ausnehmung (4) vorhanden ist, der zumindest teilweise aus einem Lotwerkstoff besteht,
**dadurch gekennzeichnet, dass**
der Abschluss der Ausnehmung (4) nur durch eine Lötfolie (7) gebildet ist, die nur teilweise aus einem Lotwerkstoff besteht.

2. Werkstück nach Anspruch 1,
**dadurch gekennzeichnet,**
**dass** die Ausnehmung (4) ein Sackloch (5) ist.

3. Werkstück 1 nach Anspruch 1,
**dadurch gekennzeichnet,**
**dass** die Ausnehmung (4) ein Durchgangsloch (13) ist.

4. Werkstück 1 nach Anspruch 1,
**dadurch gekennzeichnet,**
**dass** das Werkstück (1) eine Turbinenschaufel bildet.

5. Werkstück 1 nach Anspruch 1 oder 4,
**dadurch gekennzeichnet,**
**dass** Werkstück (1) für Hochtemperaturanwendungen geeignet ist.

6. Werkstück 1 nach Anspruch 1, 4 oder 5,
**dadurch gekennzeichnet,**
**dass** das Werkstück (1) für korrosive und erosive Einsatzumgebungen geeignet ist.

7. Werkstück 1 nach Anspruch 1,
**dadurch gekennzeichnet,**
**dass** die Lötfolie (7) ein Gemisch aus einem bei Löttemperatur nicht aufschmelzenden Werkstoff, insbesondere dem Grundwerkstoff des Werkstücks (1), und einem aufschmelzenden Lotwerkstoff ist.

8. Werkstück 1 nach Anspruch 1 oder 7,
**dadurch gekennzeichnet,**
**dass** der Volumenanteil des nicht aufschmelzenden Werkstoffs den Volumenanteil des Lotwerkstoffs in der Lötfolie übersteigt, insbesondere bei 70% liegt.

9. Werkstück 1 nach Anspruch 1, 7 oder 8,
**dadurch gekennzeichnet,**
**dass** die Lötfolie (7) bis zu 4 Millimeter dick ist.

10. Werkstück 1 nach Anspruch 1, 4, 5 oder 6,
**dadurch geke8nnzeichnet,**
**dass** der Grundwerkstoff des Grundkörpers (2) eine Nickel-Basis-Superlegierung ist.

11. Werkstück nach Anspruch 1,
**dadurch gekennzeichnet,**
**dass** die Lötfolie (7) die Ausnehmung (4, 5) vollständig ausfüllt.

12. Werkstück nach Anspruch 1,
**dadurch gekennzeichnet,**
**dass** die Ausnehmung (4, 5, 13) im oberflächennahen Bereich eine umlaufende absatzförmige Querschnittsvertiefung (10) aufweist und die Lötfolie (7) auf einem Grund der Querschnittsvertiefung (10) zumindest teilweise aufliegt.

13. Verfahren zum Verschliessen zumindest einer Öffnung (3) einer Ausnehmung (4,5,13) an einer Oberfläche (6) eines Werkstücks (1),
bei dem die Ausnehmung (4,5,13) nur mit einer Lötfolie (7) überdeckt oder zumindest teilweise ausgefüllt, und dann zumindest teilweise mit dem Werkstück (1) verlötet wird, wobei die Lötfolie nur teilweise aus einem Lotwerkstoff besteht.

14. Verfahren nach Anspruch 13,
**dadurch gekennzeichnet,**
**dass** die zur Verlötung notwendige Wärme durch eine Wärmebehandlung des Werkstücks (1) aufgebracht wird, insbesondere durch eine Ausscheidungshärtung oder ein Lösungsglühen des Werkstücks (1).
